(19) Europäisches Patentamt
European Patent Office
Office européen des brevets

(11) EP 4 752 877 A1

(12) EUROPEAN PATENT APPLICATION

(43) Date of publication:
03.06.2026 Bulletin 2026/23

(21) Application number: 25203063.0

(22) Date of filing: 18.09.2025

(51) International Patent Classification (IPC):
G10L 17/26 (2013.01)   A01K 29/00 (2006.01)
G10L 25/30 (2013.01)   G10L 25/51 (2013.01)
G10L 25/63 (2013.01)

(52) Cooperative Patent Classification (CPC):
G10L 17/26; A01K 29/005; G06N 3/045;
G06N 3/096; G06N 7/01; G06N 3/0464;
G10L 25/30; G10L 25/51; G10L 25/63

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.11.2024 IN 202421093801

(71) Applicant: Tata Consultancy Services Limited
Maharashtra (IN)

(72) Inventors:
• PATIL, Ruturaj Nivas
411057 Pune, Maharashtra (IN)

• BALASUBRAMANIAN, Hemavathy
600113 Chennai, Tamil Nadu (IN)
• SARANGI, Sanat
400601 Thane (West), Maharashtra (IN)
• SINGH, Dineshkumar Jang Bahadur
400601 Thane (West), Maharashtra (IN)
• MOHITE, Jayantrao
400601 Thane (West), Maharashtra (IN)
• PAPPULA, Srinivasu
500081 Hyderabad, Telangana (IN)

(74) Representative: Goddar, Heinz J.
Boehmert & Boehmert
Anwaltspartnerschaft mbB
Pettenkoferstrasse 22
80336 München (DE)

(54) **METHOD AND SYSTEM FOR GENERATING FEED RECOMMENDATION FOR ANIMALS BY PREDICTING HUNGER BASED ON VOCALIZATION PATTERNS**

(57) This disclosure relates generally to a method and system for generating feed recommendations based on vocalization patterns of an animal. State-of-the-art methods based on analysis of the vocalization patterns are limited to livestock monitoring, individual identification, physiological states determination, and health diagnosis. However, precise identification of hunger state not yet achieved. The disclosed method involves a deep learning model to identify hunger state and one or more hunger state level of the animal from audio chunks. A state machine maps a plurality of emotions and behaviors associated with the hunger state levels. Further, one or more emotions and behaviors associated with the hunger state level are detected. The large language model (LLM) utilizes the identified state, level, emotions and behaviors to make feed recommendations to the animal.

EP 4 752 877 A1

FIG. 3

**Description**

CROSS-REFERENCE TO RELATED APPLICATIONS AND PRIORITY

The present application claims priority to Indian application no. 202421093801, filed on November 29, 2024.

TECHNICAL FIELD

The disclosure herein generally relates to an animal feed management, and, more particularly, to the animal feed recommendation model based on deep learning approach by modeling emotions associated with various hunger states of animal.

BACKGROUND

Farm animals experience various physiological states that are associated with one or more scenarios that trigger an emotional response. Therefore, it is of interest to animal researchers and to farmers to understand the animals' behavioral responses to different physiological states and stressors, which are the biological responses elicited when an animal perceives a threat to its homeostasis. And such behavioral responses are expressed in terms of varied vocalization patterns. Farm animals like cattle are often seen to demonstrate various emotional states by their voice. Cattle, like humans, exhibit varying degrees of emotion or arousal, which could manifest in their vocalizations. The voice provides information about the age, gender, sequence, and breeding status of the vocalizing animal. The voice of cattle, therefore, contains information about the animal's extraordinary conditions, such as pain, estrus, separation from the calf, and hunger or thirst.

When the cattle feel hungry or is thirsty, the cattle phonates a voice with a specific pattern. Understanding how these vocal cues change with hunger intensity could provide valuable insights into their emotional states and behavioral responses. When cattle owners and managers lack proper training in interpreting animal sounds, it can be like trying to understand a language you have never heard before. Just like humans, animals communicate through various sounds, each carrying their own meaning. Not being able to decipher these signals could result in missed opportunities to address their needs or detect potential issues early on. For instance, a particular sound might indicate discomfort or illness, which if overlooked, could escalate into a larger health problem affecting the productivity of the herd. Understanding parameters that could impact how cattle communicate through vocalization is important. These factors might include the presence of a caretaker or other animals. Furthermore, the vocalization characteristics also vary across different levels of intensity with respect to each type of emotion exhibited by the cattle.

Without understanding the specific daily feed requirements of cattle, it becomes challenging to ensure they receive the right nutrition. This can lead to inefficiencies in feed management, where some animals may be overfed while others are underfed. Ultimately, this can impact the health, growth, and productivity of the entire herd. Like any other task, certain operations in cattle management require precise timing for optimal results. Whether it is feeding, watering, or performing artificial insemination (AI), knowing the right time to conduct these activities is crucial. Without the ability to predict these timings accurately, missing a requirement may lead to unsought consequences.

SUMMARY

Embodiments of the present disclosure present technological improvements as solutions to one or more of the above-mentioned technical problems recognized by the inventors in conventional systems. For example, in one embodiment, a method of generating feed recommendation based on a physiological and emotional state of a target animal identified from a vocalization pattern is provided. The method includes extracting one or more audio chunks of a target animal from an audio file, wherein the audio file comprises (i) one or more audio chunks associated with one or more animals, (ii) one or more audio chunks associated with one or more caretakers, and (iii) one or more audio chunks corresponding to background noises. The extracted one or more audio chunks forms the animal utterances for further processing. The method further includes extracting a plurality of augmented audio characteristics from the one or more audio chunks of the target animal to obtain a plurality of extracted audio characteristics. The plurality of extracted audio characteristics includes a rate, a pitch average, a pitch range, an amplitude, one or more harmonics, an intensity, a duration, a silence duration, and a silence rate. The method further includes processing the plurality of extracted audio characteristics by a custom convolutional neural network (CNN) to classify a state of the target animal as one of (a) a hunger state, and (b) a non-hunger state. The custom CNN calculates a probability score of hunger by aggregating a probability percentage assigned to each audio chunk comprising the plurality of extracted audio characteristics of the target animal. The number of audio chunks extracted is based on a plurality of parameters comprising a breed of the target animal, an age of the target animal, a season, a pregnancy stage, an estrus cycle number, and one or more feeding factors.

The number of audio chunks from a total number of audio chunks utilized in calculating the probability score of hunger is based on one or more variables selected from a breed of the target animal, an age of the target animal, a season, a pregnancy stage, an estrus cycle number, and one or more feeding factors. The method further includes assigning one or more weights to the plurality of extracted audio characteristics of the target animal to generate a state score. The one or more weights assigned to the extracted audio characteristics carries (a) high weights to an audio duration, an audio rate, a pitch range, silence duration, a silence rate, and a presence of the caretaker, (b) medium weights to an audio intensity and a fundamental frequency, and (c) low or zero weights to an audio amplitude and audio harmonics. The state score is utilized in sub-classifying the hunger state into a plurality of hunger state levels. The method further includes storing one or more extracted audio characteristics associated with a detected hunger state level from the plurality of hunger state levels. The method further includes identifying a plurality of current possible emotions and a plurality of current possible behaviors of the target animal by providing the detected hunger state level of the target animal to a state machine (SM). The state machine comprises: (a) a plurality of possible states exhibited by one or more animals, wherein the plurality of possible states are mapped on a time scale from $t_0$ to $t_{nn}$, and wherein the plurality of possible states comprises (a) a zero hunger state, (b) a hunger state having a plurality of intensity levels, and (c) a plurality of partial fed states having a plurality of intensity levels, wherein the plurality of intensity levels associated with the hunger state and the partial fed state exhibits an upward trend with a lowest intensity level at a time $t_0$ and a highest intensity level at the time $t_n$. One or more values assigned to the plurality of extracted audio characteristics for detected hunger state level are pre-defined in the state machine as a boundary limit of each detected hunger state level, and wherein the boundary limit get updated for each detected hunger state level in the state machine based on one or more custom CNN recommendations. The method further includes detecting at least one current emotion by providing the plurality of current possible emotions, and the extracted audio characteristics to the custom CNN. The method further includes identifying at least one behavior associated with the at least one current emotion detected by the custom CNN. The method further includes assigning one or more weights to the plurality of extracted audio characteristics of the at least one current emotion of the target animal to generate an emotion score, wherein the emotion score is utilized in identifying a current emotion progression level of the target animal. The emotion score is an aggregated value of the normalized value the one or more extracted audio characteristics having the high weightage, the normalized value the one or more extracted audio characteristics having the medium weightage, and the normalized value the one or more extracted audio characteristics having the low weightage. The method further includes generating an activity score by processing the state score and the emotion score. The method further includes generating one or more feed recommendations for the target animal by providing (a) the detected hunger state level, (b) the at least one current emotion, (c) the at least current behavior, (d) the emotion score, and (e) the activity score to a pre-trained large language model (LLM). The one or more feed recommendations generated by the LLM is utilized in providing a recommended feed to the target animal by one or more feed dispensers.

In another aspect, a system of generating feed recommendation based on a physiological and emotional state of a target animal identified from a vocalization pattern is provided. The system includes at least one memory storing programmed instructions; one or more Input /Output (I/O) interfaces; and one or more hardware processors, and a feed recommendation module operatively coupled to a corresponding at least one memory, wherein the system is configured to extract one or more audio chunks of a target animal from an audio file, wherein the audio file comprises (i) one or more audio chunks associated with one or more animals, (ii) one or more audio chunks associated with one or more caretakers, and (iii) one or more audio chunks corresponding to background noises. The extracted one or more audio chunks forms the animal utterances for further processing. Further, the system is configured to extract a plurality of augmented audio characteristics from the one or more audio chunks of the target animal to obtain a plurality of extracted audio characteristics. The plurality of extracted audio characteristics includes a rate, a pitch average, a pitch range, an amplitude, one or more harmonics, an intensity, a duration, a silence duration, and a silence rate. Further, the system is configured to process the plurality of extracted audio characteristics by a custom convolutional neural network (CNN) to classify a state of the target animal as one of (a) a hunger state, and (b) a non-hunger state. The custom CNN calculates a probability score of hunger by aggregating a probability percentage assigned to each audio chunk comprising the plurality of extracted audio characteristics of the target animal. The number of audio chunks extracted is based on a plurality of parameters comprising a breed of the target animal, an age of the target animal, a season, a pregnancy stage, an estrus cycle number, and one or more feeding factors. The number of audio chunks from a total number of audio chunks utilized in calculating the probability score of hunger is based on one or more variables selected from a breed of the target animal, an age of the target animal, a season, a pregnancy stage, an estrus cycle number, and one or more feeding factors. Further, the system is configured to assign one or more weights to the plurality of extracted audio characteristics of the target animal to generate a state score. The one or more weights assigned to the extracted audio characteristics carries (a) high weights to an audio duration, an audio rate, a pitch range, silence duration, a silence rate, and a presence of the caretaker, (b) medium weights to an audio intensity and a fundamental frequency, and (c) low or zero weights to an audio amplitude and audio harmonics. The state score is utilized in sub-classifying the hunger state into a plurality of hunger state levels. Further, the system is configured to store one or more extracted audio characteristics associated with a detected hunger state level from the plurality of hunger state levels. Further, the system is configured to identify a plurality of current possible emotions and a plurality of current possible behaviors of the target animal by providing the detected hunger state level of the target animal to a state machine (SM). The state machine comprises: (a) a plurality of possible states exhibited by one or more animals, wherein the plurality of possible states are mapped on a time scale from $t_0$ to $t_n$, and wherein the plurality of possible states comprises (a) a zero hunger state, (b) a hunger state having a plurality of intensity levels, and (c) a plurality of partial fed states having a plurality of intensity levels, wherein the plurality of intensity levels associated with the hunger state and the partial fed state exhibits an upward trend with a lowest intensity level at a time $t_0$ and a highest intensity level at the time $t_n$. One or more values assigned to the plurality of extracted audio characteristics for detected hunger state level are pre-defined in the state machine as a boundary limit of each detected hunger state level, and wherein the boundary limit get updated for each detected hunger state level in the state machine based on one or more custom CNN recommendations. Further, the system is configured to detect at least one current emotion by providing the plurality of current possible emotions, and the extracted audio characteristics to the custom CNN. Further, the system is configured to identify at least one behavior associated with the at least one current emotion detected by the custom CNN. Further, the system is configured to assign one or more weights to the plurality of extracted audio characteristics of the at least one current emotion of the target animal to generate an emotion score, wherein the emotion score is utilized in identifying a current emotion progression level of the target animal. The emotion score is an aggregated value of the normalized value the one or more extracted audio characteristics having the high weightage, the normalized value the one or more extracted audio characteristics having the medium weightage, and the normalized value the one or more extracted audio characteristics having the low weightage. Further, the system is configured to generate an activity score by processing the state score and the emotion score. Further, the system is configured to generate one or more feed recommendations for the target animal by providing (a) the detected hunger state level, (b) the at least one current emotion, (c) the at least current behavior, (d) the emotion score, and (e) the activity score to a pre-trained large language model (LLM). The one or more feed recommendations generated by the LLM is utilized in providing a recommended feed to the target animal by one or more feed dispensers.

In yet another aspect, a computer program product including a non-transitory computer-readable medium embodied therein a computer program of generating feed recommendation based on a physiological and emotional state of a target animal identified from a vocalization pattern is provided. The computer readable program, when executed on a computing device, causes the computing device to extract one or more audio chunks of a target animal from an audio file, wherein the audio file comprises (i) one or more audio chunks associated with one or more animals, (ii) one or more audio chunks associated with one or more caretakers, and (iii) one or more audio chunks corresponding to background noises. The extracted one or more audio chunks forms the animal utterances for further processing. The computer readable program, when executed on a computing device, causes the computing device to extract a plurality of augmented audio characteristics from the one or more audio chunks of the target animal to obtain a plurality of extracted audio characteristics. The plurality of extracted audio characteristics includes a rate, a pitch average, a pitch range, an amplitude, one or more harmonics, an intensity, a duration, a silence duration, and a silence rate. The computer readable program, when executed on a computing device, causes the computing device to process the plurality of extracted audio characteristics by a custom convolutional neural network (CNN) to classify a state of the target animal as one of (a) a hunger state, and (b) a non-hunger state. The custom CNN calculates a probability score of hunger by aggregating a probability percentage assigned to each audio chunk comprising the plurality of extracted audio characteristics of the target animal. The number of audio chunks from a total number of audio chunks utilized in calculating the probability score of hunger is based on one or more variables selected from a breed of the target animal, an age of the target animal, a season, a pregnancy stage, an estrus cycle number, and one or more feeding factors. The computer readable program, when executed on a computing device, causes the computing device to assign one or more weights to the plurality of extracted audio characteristics of the target animal to generate a state score. The one or more weights assigned to the extracted audio characteristics carries (a) high weights to an audio duration, an audio rate, a pitch range, silence duration, a silence rate, and a presence of the caretaker, (b) medium weights to an audio intensity and a fundamental frequency, and (c) low or zero weights to an audio amplitude and audio harmonics. The state score is utilized in sub-classifying the hunger state into a plurality of hunger state levels. The computer readable program, when executed on a computing device, causes the computing device to store one or more extracted audio characteristics associated with a detected hunger state level from the plurality of hunger state levels. The computer readable program, when executed on a computing device, causes the computing device to identify a plurality of current possible emotions and a plurality of current possible behaviors of the target animal by providing the detected hunger state level of the target animal to a state machine (SM). The state machine comprises: (a) a plurality of possible states exhibited by one or more animals, wherein the plurality of possible states are mapped on a time scale from $t_0$ to $t_n$, and wherein the plurality of possible states comprises (a) a zero hunger state, (b) a hunger state having a plurality of intensity levels, and (c) a plurality of partial fed states having a plurality of intensity levels, wherein the plurality of intensity levels associated with the hunger state and the partial fed state exhibits an upward trend with a lowest intensity level at a time $t_0$ and a highest intensity level at the time $t_n$. One or more values assigned to the plurality of extracted audio characteristics for detected hunger state level are pre-defined in the state machine as a boundary limit of each detected hunger state level, and wherein the boundary limit get updated for each detected hunger state level in the state machine based on one or more custom CNN recommendations. The computer readable program, when executed on a computing device, causes the computing device to detect at least one current emotion by providing the plurality of current possible emotions, and the extracted audio characteristics to the custom CNN. The computer readable program, when executed on a computing device, causes the computing device to identify at least one behavior associated with at least one current emotion detected by the custom CNN. The computer readable program, when executed on a computing device, causes the computing device to assign one or more weights to the plurality of extracted audio characteristics of the at least one current emotion of the target animal to generate an emotion score, wherein the emotion score is utilized in identifying a current emotion progression level of the target animal. The emotion score is an aggregated value of the normalized value the one or more extracted audio characteristics having the high weightage, the normalized value the one or more extracted audio characteristics having the medium weightage, and the normalized value the one or more extracted audio characteristics having the low weightage. The computer readable program, when executed on a computing device, causes the computing device to generate an activity score by processing the state score and the emotion score. The computer readable program, when executed on a computing device, causes the computing device to generate one or more feed recommendations for the target animal by providing (a) the detected hunger state level, (b) the at least one current emotion, (c) the at least current behavior, (d) the emotion score, and (e) the activity score to a pre-trained large language model (LLM). The one or more feed recommendations generated by the LLM is utilized in providing a recommended feed to the target animal by one or more feed dispensers.

It is to be understood that both the foregoing general description and the following detailed description are exemplary and explanatory only and are not restrictive of the invention, as claimed.

BRIEF DESCRIPTION OF DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system 100 for feed recommendation, according to some embodiments of the present disclosure.
FIG. 2 is an illustration of a state machine comprising various physiological state of a target animal cattle across multiple hunger intensity levels correlated with its vocalization pattern, according to some embodiments of the present disclosure.
FIG. 3 illustrates a block diagram identifying hunger state through an animal utterances, according to some embodiments of the present disclosure.
FIGS. 4A and FIG. 4B are flow diagrams of a process of generating an activity score of the target animal based on a state score and an emotion score identified using the plurality of extracted audio characteristics, according to some embodiments of the present disclosure.
FIGS. 5A, 5B and 5C are flow diagrams of an illustrative method 500 for feed recommendation, using the system of FIG. 1, according to some embodiments of the present disclosure.

DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present invention utilizes the custom CNN model to make a feed recommendation to a target animal demonstrating the hunger state. The target animal is a farm animal e.g., cattle. The feed recommendation is made to the cattle based on a plurality of vocalization patterns exhibited by the cattle. The vocalization patterns are correlated with the emotional state of the cattle. With the passage of time, these emotional states are seen to be altered. E.g., the cattle at a rest state and not having any desire for food is considered to be in a rest state. At the rest stage, the cattle may exhibit certain behavior like standing, sitting and certain emotions like calm, happy etc. However, the same cattle at a hunger state having great desire for food might appear restless and exhibit certain behavior like searching for food, stomping and certain emotions like sad, frustrated or irritated. With the passage of time, these behaviors and emotions may exhibit various intensity levels depicting an upwards trend from low intensity to the high intensity. In the present disclosure, a state machine is designed that captures a plurality of states. The change in the state is associated with an stimuli. Each state captured further demonstrates a plurality of intensity levels. The state machine segregates, within the plurality of hunger states, each hunger levels of hunger intensity that changes with different stimulus such as time passed, feed quality, feed quantity given, and an influence of another animal or a person. The state machine correlates each state and levels of state with mental state and behavior of animal which are differentiated by unique combinations of vocalization attributes. The vocalization attributes are generated from one or more audio utterances of the cattle. Additionally, annotation and extraction of the cattle utterances is done with the waveform and spectrogram signatures. Using both waveform and spectrogram signature, and silence interval, noise, utterances are segmented. The segmented utterances are classified into a hunger category and a non-hunger category. The extracted utterances in the form of one or more audio chunks are used to estimate and predict current emotion and its progression pattern for the animal.

The custom CNN model with extracted audio characteristics is used to predict current emotion of the target animal. The current emotion then predicts current prominent behavior from a plurality of possible behaviors. Similarly, the method of the present disclosure further involves emotion and behavior simulation for multiple next hunger state levels. Out of next possible multiple emotions, exact one next possible emotion is predicted using custom deep learning network based on features extracted from previous multiple audio chunks. The state machine is used to find hunger state level from observed behavior. Using current hunger state level, emotion, emotion score, and behavior and LLM, feed recommendations are provided.

As used herein the term "state machine" refers to a knowledge graph exhibiting a plurality of states (mental states) and behaviors of the cattle across multiple hunger intensity levels correlated with its vocalization patterns between a rest state and a fed state with the passage of time.

As used herein the term "target animal" refers to an animal along with other animals in a farm or a place meant for animal care and management identified to be served with feed.

As used herein the term "rest state" refers to a state in which the target animal is considered to exhibit zero desire for hunger and exhibits subtle emotions with respect to satiety.

As used herein the term "fed state" refers to a state in which the target animal is considered to exhibit calm, relaxed, happy emotions, and seating, ruminating behaviors.

As used herein the term "half fed state" refers to a state in which the target animal is considered to exhibit frustration, excitement emotion, and looking at feed storage area, standing, making steps and moving head behavior.

As used herein the term "little fed" refers to a state in which the target animal is considered to exhibit sad, angry, frustration emotions, and behaviors like looking at feed storage area, standing, making steps and moving head, and the target animal is considered to be 0-30% fed.

As used herein the term "hungry state level 0" to refers to a state in which the target animal is considered to be calm, neutral emotion, and behaviors like looking at feed storage area and standing.

As used herein the term "hunger state level n" refers to refers to a state in which the target animal is considered to exhibit one out of angry, frustrated emotion, and behavior like looking at feed storage area, standing, making steps, moving head, and moving back and forth.

As used herein the term "state score" refers to an aggregated value of the normalized score of the one or more extracted audio characteristics having high weightage for hunger level detection, the normalized score of the one or more extracted audio characteristics having medium weightage for hunger level detection and the normalized score of the one or more extracted audio characteristics having low weightage for hunger level detection.

As used the term "emotion score" refers to an aggregated value of the normalized score of the one or more extracted audio characteristics having high weightage for emotion progression level detection, the normalized score of the one or more extracted audio characteristics having medium weightage for emotion progression level detection and the normalized score of the one or more extracted audio characteristics having low weightage for emotion progression level detection.

As used herein the term "activity score" refers to a weighted sum of the state score and emotion score.

As used herein, the terms "audio chunks" and "animal utterances" are used interchangeably throughout the specification and refers to an extracted and processed segments of a specific duration from an audio file wherein the audio file undergoes segmentation to identify vocalization patterns associated with a specific entity among the vocalization patterns of a plurality of entities.

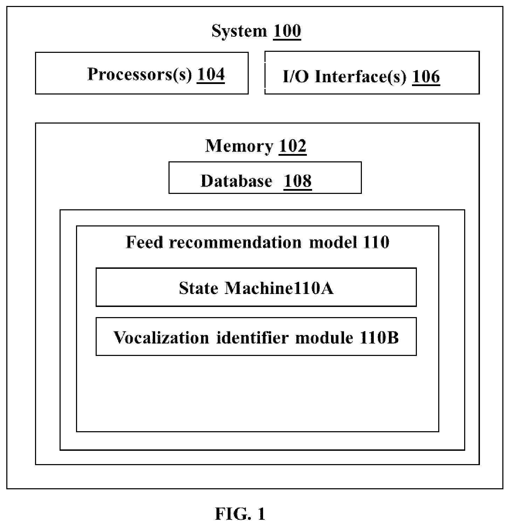

Referring now to the drawings, and more particularly to FIG. 1 through FIG. 5C, where similar reference characters denote corresponding features consistently throughout the figures, there are shown preferred embodiments, and these embodiments are described in the context of the following exemplary system and/or method.

FIG. 1 illustrates an exemplary block diagram of a system 100 for feed recommendation, according to some embodiments of the present disclosure.

In an embodiment, the system 100 includes a processor(s) 104, communication interface device(s) 106, alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100. Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like. The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to number of external devices or to another server or devices. The memory 102 may include any computer-readable medium known in the art including, for example, volatile memory, such as static random-access memory (SRAM) and dynamic random-access memory (DRAM), and/or nonvolatile memory, such as read only memory (ROM), erasable programmable ROM, flash memories, hard disks, optical disks, and magnetic tapes. In an embodiment, the memory 102 includes a feed recommendation model 110. The feed recommendation model processes one or more audio chunks associated with one or more animals along with other noises. Further, a plurality of augmented audio characteristics are extracted from the one or more audio chunks of the target animal to obtain a plurality of extracted audio characteristics. The model utilizes a custom convolutional neural network (CNN) to process the plurality of extracted audio characteristics and classify the state of the target animal as one of (a) a hunger state, and (b) a non-hunger state. The custom CNN further sub-classifies the hunger state into a plurality of hunger state levels. The feed recommendation model 110 utilizes state machine 110A to identify a plurality of current possible emotions and a plurality of current possible behaviors of the target animal associated with detected hunger state level. The custom CNN further detects at least one current emotion from the plurality of current possible emotions. The feed recommendation model 100 calculates a state score and an emotion score to assign an activity score (e.g., a cattle activity score). The (a) detected hunger state level, (b) the current emotion, (c) the current behavior, (d) the emotion score, and (e) the activity score is provided to a pre-trained LLM to generate one or more feed recommendations for the target animal.

The memory 102 further comprises of a plurality of modules that includes programs or coded instructions that supplement applications or functions performed by the system 100 for executing different steps involved in the analysis of the health of the subject, being performed by the system 100. The modules, amongst other things, can include routines, programs, objects, components, and data structures, which perform particular tasks or implement particular abstract data types. The modules may also be used as signal processor(s), node machine(s), logic circuitries, and/or any other device or component that manipulates signals based on operational instructions. Further, the modules can be used by hardware, by computer-readable instructions executed by the one or more hardware processors 104, or by a combination thereof. The modules may include computer-readable instructions that supplement applications or functions performed by the system 100. Further, the memory 102 may comprise information pertaining to input(s)/output(s) of each step performed by the processor(s) 104 of the system100 and methods of the present disclosure. Further, the memory 102 includes a database 108. The database (or repository) 108 may include a plurality of abstracted piece of code for refinement and data that is processed, received, or generated as a result of the execution of the plurality of modules. The external database is communi-catively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

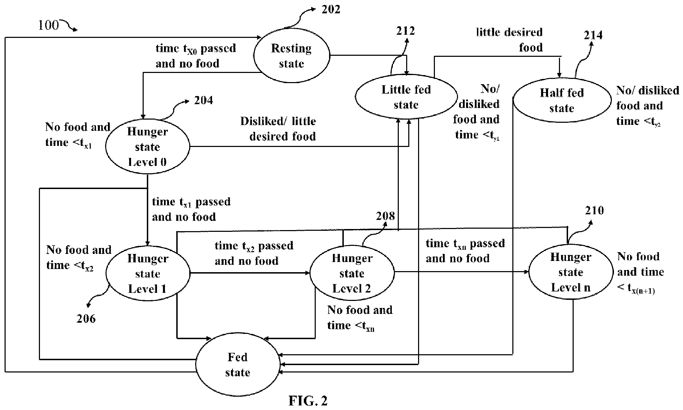

FIG. 2 is an illustration of a state machine comprising various physiological state of target animal across multiple hunger intensity levels correlated with its vocalization pattern, according to some embodiments of the present disclosure.

As illustrated in the FIG. 2, the state machine represents a plurality of physiological and emotional states of the animal. The state machine comprises: (a) a plurality of possible states exhibited by one or more animals, wherein the plurality of possible states are mapped on a time scale from $t_0$ to $t_n$ wherein the plurality of possible states are recorded on an hour scale from $t_{x0}$ to $t_{xn}$ and $t_{y0}$ to $t_{yn.}$. The plurality of possible states comprises (a) a zero-hunger state, (b) a hunger state having a plurality of intensity levels, and (c) a plurality of partial fed states having a plurality of intensity levels, wherein the plurality of intensity levels associated with the hunger state and the partial fed state exhibits an upward trend with a lowest intensity level at a time $t_0$ and a highest intensity level at the time $t_n$. Each physiological state exhibits one or more intensity levels. The physiological state as well as the associated intensity level are identified by processing the vocalization pattern of the animal using one or more machine learning models. At 202, the state machine has an initiation point as a rest state. The physiological state of the animal changes from the rest state to a hunger state level 0 as time passes without food. At 204, after a specific time period t is expired, without taking food after time $t_{x0}$ the animal state changes from the rest state to the hunger state level 0. The animal remains in the hunger state level 0 if food is not given, and time is passed to $< t_{x1}$. At 206, after $t_{x1}$ time without food, the physiological state of the animal changes from the hunger state level 0 to a hunger state level 1. Similarly, the animal remain in hunger state level 1 if food is not given, and time is passed $< t_{x2}$. At 208, after $t_{x2}$ time without food, the animal state changes from the hunger state level 1 to a hunger state level 2. Likewise, the animal remain in hunger state level 2 if food is not given, and time is passed $< t_{xn}$. At 210, after $t_{xn}$ time

without food, the physiological state of the animal changes from the hunger state level 2 to hunger state level n. At 212, in between, if disliked or little desired food is given to the animal, then the animal hunger state changes from the hunger state level x to a little fed state. If no or disliked food is given to the animal for time $< t_{y1}$, then animal remain in a little fed state. After $t_{y1}$ time without or disliked food, animal state changes from little fed state to hunger state level x. At 214, in a little fed state, if little desired feed is given, then the animal state changes from the little fed state to a half-fed state. If no food or disliked food is given to cattle for time $< t_{y2}$, then cattle remain in a half-fed state. Again after $t_{y2}$ time without or disliked food, the cattle state changes from a half-fed state to a little fed state. In any state, if desired food is given to cattle, then cattle state changes from hunger state level x to fed state. Subsequently, the animal state changes from the fed state to the rest state. Each physiological state level has emotions and behaviors tagged to it. The hunger state level 0 has calm, neutral emotion. The animal looks at feed storage area and demonstrates a standing behavior. The hunger state level 1 has one emotion out of neutral, sad. The animal continues to look at feed storage area, standing, making steps, ears backward or hung down, rubbing head, lower heart rate, and moving head behaviors. The hunger state level 2 has one emotion out of irritation, angry. The animal looks at feed storage area, standing, making steps and demonstrates moving head behaviors. The hunger state level n has one emotion out of angry, frustration. The animal has looking at feed storage area, standing, making steps, moving head, and demonstrate moving back and forth behaviors. The little fed state has sad, angry and frustration emotions. The animal continues to look at feed storage area, standing, making steps and demonstrates moving head behaviors. The half-fed state has frustration and excitement emotions. The animal looks at feed storage area, standing, making steps and demonstrates moving head behaviors. Resting state has calm, relaxed, happy emotions mapped to the state. The animal demonstrates seating and sleeping behaviors. The boundary limits of all audio characteristics for each hunger state level and emotions are embedded in the state machine. Each state level and the associated emotions as well as the associated behaviors are presented in Table-1.

Table-1

| Hunger State | Emotions | Behaviors |
|---|---|---|
| Resting State | Calm, Relaxed, Happy | Seating, Sleeping |
| Hunger State Level 0 | Calm, Neutral | Looking at feed storage area, Standing |
| Hunger State Level 1 | Neutral, Sad | Looking at feed storage area, standing, making steps, ears backward or hung down, rubbing head, lower heart rate, and moving head |
| Hunger State Level 2 | Irritated, Angry | Looking at feed storage area, standing, making steps and moving head |
| Hunger State Level n | Angry, Frustrated | Looking at feed storage area, standing, making steps, moving head, and moving back and forth |
| Little Fed State | Sad, Angry, Frustration | Looking at feed storage area, standing, making steps and moving head |
| Half Fed State | Angry, Excitement | Looking at feed storage area, standing, making steps and moving head |
| Fed State | Calm, Relaxed, Happy | Seating, Ruminating |

According to an embodiment, the state machine is prepared by the steps comprising: (a) classifying the audio chunks into the plurality of possible states exhibited by the target animal by the custom CNN model wherein the custom CNN is pre-trained on a plurality of audio chunk of the one or more animals; (b) characterizing one or more intensity levels associated with each state from the plurality of possible states, wherein the one or more intensity levels are correlated with a plurality of audio characteristics exhibited in the audio chunks; (c) tagging one or more emotions to each intensity levels from an emotional matrix wherein the emotion matrix comprises a plurality of range of emotions from positive to negative as happy, relaxed, calm, neutral, sad, irritated, angry, and frustrated; and (d) tagging one or more behaviors to each intensity levels from a behavior matrix wherein the behavior matrix comprises a plurality of behaviors.

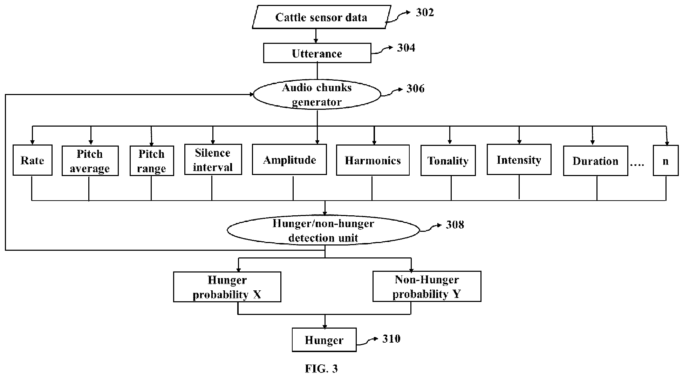

FIG. 3 illustrates a block diagram identifying hunger state through an animal utterance, according to some embodiments of the present disclosure.

At 302, an animal utterance is captured as an audio file through sensors placed in closed proximity to the target animal. The audio file comprises (i) one or more audio chunks associated with one or more animals, (ii) one or more audio chunks associated with one or more caretakers, and (iii) one or more audio chunks corresponding to background noises. The extracted one or more audio chunks forms the animal utterances for further processing. At 304, the one or more audio chunks of the target animal are extracted from the audio file. The audio file comprises an audio file data having a division of non-noise/non-silence, or "chunks" or "snippets," splitting an audio stream at moments that are apparently moments of silence between words or sentences. One or more audio chunks may overlap in some instances while in other instances, the chunks are always distinct. At 306, using an audio chunk generator, a plurality of augmented audio characteristics are then extracted from the one or more audio chunks of the target animal to obtain a plurality of extracted audio characteristics. The plurality of extracted audio characteristics includes rate, pitch average, pitch range, silence interval, amplitude, harmonics, tonality, intensity and duration. The custom deep learning network (i.e., custom convolutional neural network or custom CNN) will be used for animal state classification as hunger and non-hunger using the audio characteristics. The custom CNN model provides hunger state and non-hunger state with probability percentages. This process continues for some chunks and provides hunger and non-hunger class with probability for each chunk. The probability for hunger is checked for some chunks. If multiple chunks have high probability of hunger, then output is provided as hunger class. If few or one chunk have high probability of hunger, then output is provided as non-hunger class. A level of hunger is detected once hunger state is confirmed. Using the extracted audio characteristics a state score is generated. The state score determines the level of hunger. According to another embodiment, a plurality of augmented audio characteristics are derived from statistic measures of the plurality of extracted audio characteristics includes rate, pitch average, pitch range, silence interval, silence rate amplitude, harmonics, tonality, intensity, duration, low level features. Energy, zero-crossing rate, spectral centroid, spectral bandwidth, formants, chroma features, temporal features, and loudness. At 308, a custom CNN processes the plurality of extracted audio characteristics to classify a state of the target animal as one of (a) a hunger state, and (b) a non-hunger state. For the state score generation, the plurality of extracted audio characteristics rate, pitch average, pitch range, silence interval, amplitude, harmonics, tonality, intensity and duration are categorized by assigning weights to each extracted audio characteristic according to their contribution in detection of the state. According to an embodiment, high weighted audio characteristics are audio duration, rate and pitch range, silence duration and rate, and presence of caretaker. Medium weighted audio characteristics are audio intensity and fundamental frequency. Low or zero weighted audio characteristics are audio amplitude and harmonics. After suitable weight assignments, all values of the extracted audio characteristics are normalized between 0 to 1. This will be done in reference to the highest and lowest values of each extracted audio characteristic. These highest and lowest values are provided to the custom CNN model based on breed and age of the target animal. At 310, using custom CNN, the hunger state is identified. Once the target animal is identified in the hunger state, level of hunger is detected using state score (SS). If score is below $SS_1$%, then model will give output as Hunger level 1, if score is between $SS_1$% and $SS_2$%, then model will give output as Hunger level 2, if score is between $SS_2$% and $SS_3$%, then model will give output as Hunger level 3, if score is between $SS_3$% and $SS_4$%, then model will give output as Hunger level 4, and if score is above $SS_4$%, then model will give output as Hunger level 5. The levels of hunger state can be n.

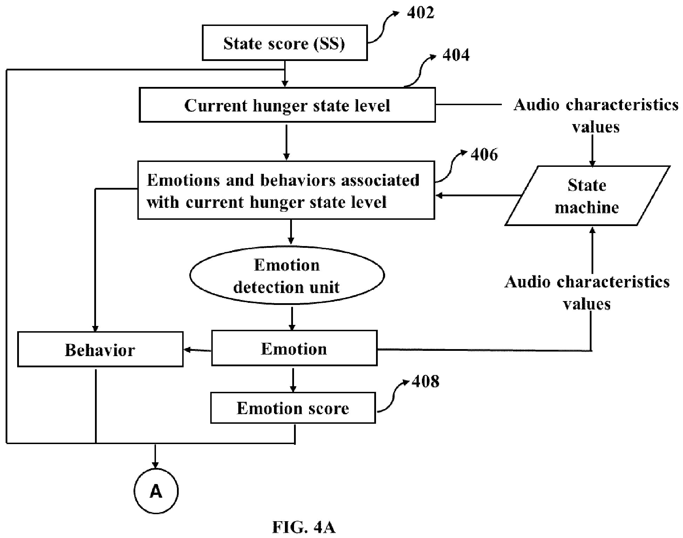

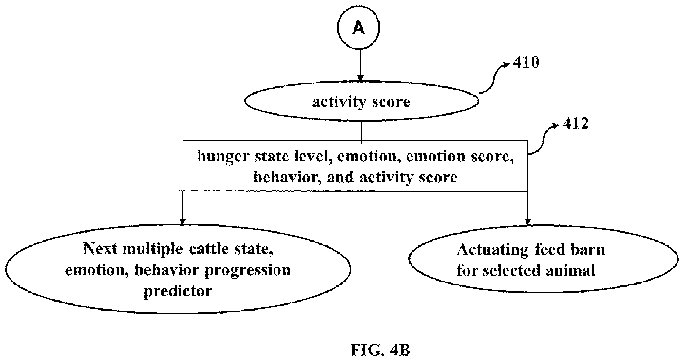

FIGS. 4A and FIG. 4B are flow diagrams of a process of generating an activity score of the target animal based on a state score and an emotion score identified using the plurality of extracted audio characteristics, according to some embodiments of the present disclosure.

As illustrated in FIGS. 4A and 4B, the extracted audio characteristics of the animal are processed to identify one or more associated emotions, and one or more associated behaviors. At 402, once the hunger state is identified for the target animal, the values of the plurality of audio characteristics associated with the hunger state are stored. If the values of the plurality of audio characteristics associated with the hunger state are smaller or higher than a pre-defined boundary limits of the audio characteristics available in the state machine for the detected hunger state level, then these boundary limits will get updated or replaced for detected hunger state level in the state machine for the stored audio characteristics value. This makes the state machine dynamic and adaptive to new scenarios. The stored values of the plurality of audio characteristics associated with the hunger state are utilized in calculating the state score. The state score determines the hunger state level, and is represented as equation (1):

$$State\ Score\ (SS) = f(AC_{10} * HW_S, AC_{11} * HW_S, AC_2 * MW_S, AC_3 * LW_S)\ (1)$$

where, $AC_{10}$ is an average of the normalized value of audio duration, audio rate, audio pitch range, silence rate, $AC_{11}$ is an average of the normalized value of silence duration and rate of caretaker's interaction with cattle, $AC_{22}$ is an average of the normalized value of audio intensity and audio fundamental frequency, $AC_3$ is the average of the normalized value of audio amplitude and audio harmonics, and $HW_S$, $MW_S$ and $LW_S$ are the high weightage, medium weightage and low weightage for state score generation, respectively.

At 404, the state score is utilized to identify one or more hunger state level. The one or more hunger state level is associated with an intensity of hunger. The target animal at time tx0 identified as in the hunger state may exhibit various level of the hunger with the passage of time. Therefore predicting the level of hunger state gives precise measurements of emotions associated within various levels of the hunger state.

At 406, a plurality of current possible emotions and a plurality of current possible behaviors of the target animal are identified by providing the detected hunger state level of the target animal to the state machine. The extracted audio characteristics associated with the detected hunger state level is provided to the state machine. The state machine scans the plurality of state, and the plurality of levels associated to each state to identify the plurality of current possible emotions and the plurality of current possible behaviors of the target animal. At 408, the plurality of current possible emotions are provided to an emotion detection unit to segregate each current possible emotions associated with the identified hunger state level. The custom deep learning classification network is trained with multiple distinct output layers, each corresponding to a specific set of emotions associated with specific hunger state level. Using the custom CNN, the current emotion of the target animal out of all associated emotions to current hunger state level is detected. The current emotion progression level is estimated using an emotion score. The emotion score to know current emotion progression level is calculated with the following equation (2):

$$Emotion\ Score\ (ES) = f(AC_1 * HW_E, AC_2 * MW_E, AC_3 * LW_E)\ (2)$$

where, $AC_1$ is the average of the normalized value of audio frequency, audio duration, audio rate, silence interval rate and duration, audio intensity,
$AC_2$ is the average of the normalized value of audio pitch, audio formants, $AC_3$ is the average of the normalized value of audio harmonics, and
$HW_E$, $MW_E$ and $LW_E$ are the high weightage, medium weightage and low weightage for emotion score generation, respectively.

The high weights are given to those characteristics that changes in high degree for variation in the emotion level. The medium weights are given to those characteristics that change in medium degree for variation in the emotion level. The low weights are given to those characteristics that change in low degree for variation in the emotion level. At 410, activity score of the target animal is generated using the state score and the emotion score as equation (3):

$$Activity\ Score\ (AS) = (SS * W1) + (ES * W2)\ (3)$$

Where, SS is State Score, and ES is Emotion Score.
W1 and W2 are weightages for the state score and the emotion score, respectively.

At 412, one or more next hunger state level, one or more next possible emotions, and one or more next possible behaviors of the target animal are detected using the state machine. Out of the one or more next possible multiple emotions, at least one (i.e., a closest or an exact) next possible emotion is predicted using custom CNN based on features extracted from the extracted audio characteristics from previous all chunks. The plurality of next possible hunger state levels from the state machine are provided to a regression model wherein the regression model simulates a plurality of next possible emotions and a plurality of next possible behaviors of the target animal for detecting at least one from the plurality of next possible hunger state levels when the recommended feed is not provided. Therefore, the plurality of next possible hunger state levels from the state machine are provided to a regression model wherein the regression model simulates a plurality of next possible emotions and a plurality of next possible behaviors of the target animal for determining the hunger state level of the target animal at a future time instance.

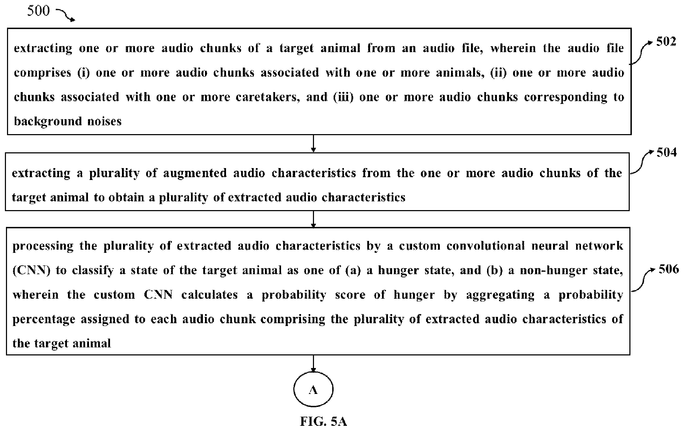

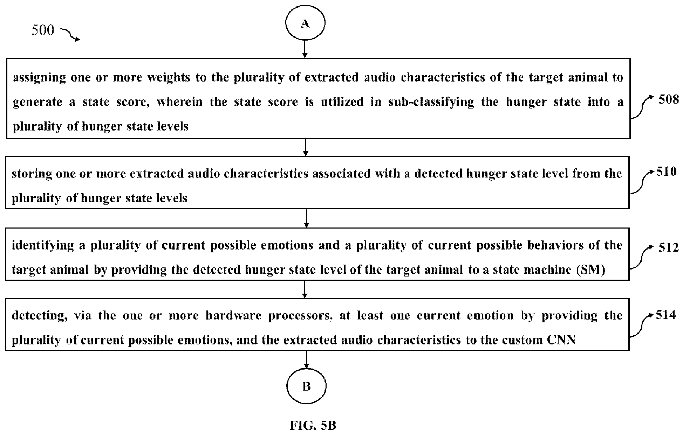

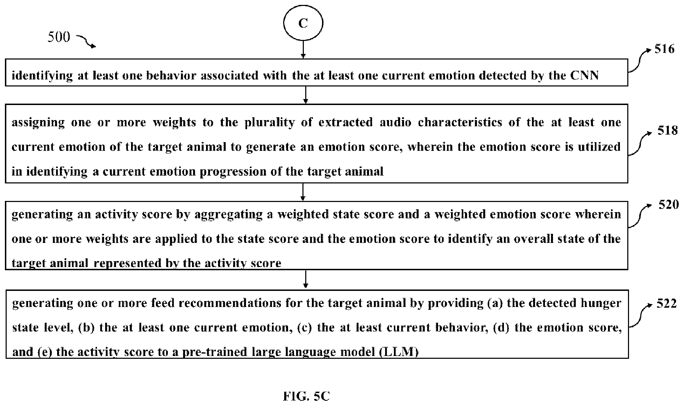

FIGS. 5A, 5B and 5C is a flow diagram of an illustrative method 500 for feed recommendation, according to some embodiments of the present disclosure.

The steps of the method 500 of the present disclosure will now be explained with reference to the components or blocks of the system 100 as depicted in FIG. 1 through FIG. 5C. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously. In the present disclosure, an automated feed recommendation method is provided that precisely identifies the hunger state of the target animal based on a four-way approach. The four-way approach utilizes the vocalization patterns of the target animal to systematically identify the hunger state, the hunger state level, the one or more associated emotions with the hunger state level and the one or more associated behavior exhibited by the target animal in the identified hunger state level. Based on the identified state, the state level, the associated emotions and the associated behaviors, the LLM generates one or more feed recommendations. The feed recommendation is provided to dispensers for an automated dispensing of the feed barn to the target animal. At step 502 of the method 500, the one or more hardware processors 104 are configured to extract one or more audio chunks of the target animal from the audio file, wherein the audio file comprises (i) one or more audio chunks associated with one or more animals, (ii) one or more audio chunks associated with one or more caretakers, and (iii) one or more audio chunks corresponding to background noises. The audio file comprising an audio file data divides into non-noise/non-silence, or "chunks" or "snippets," splitting an audio stream at moments that are apparently moments of silence between words or sentences. **In** some embodiments, the audio chunks may overlap, while in other embodiments the chunks are always distinct. The audio of the target animal making sound is captured through sensors placed in the closed proximity of the target animal. Additionally, cattle age, breed, pregnancy status is also considered while processing the audio file. From the audio, a '.wav' file is extracted to obtain a plurality of audio chunks. The caretaker's sound is extracted from a .wav file. Sounds other than cattle utterances (noise) are removed from the file. Additionally, custom deep learning network is trained with waveform and spectrogram signatures of cattle sounds to detect cattle utterances from continuous audio clip. Based on the waveform and the spectrogram signature, and silence and noise intervals, animal utterances (chunks) are separated.

At step 504 of the method 500, the one or more hardware processors 104 are configured to extract a plurality of augmented audio characteristics from the one or more audio chunks of the target animal to obtain a plurality of extracted audio characteristics. The plurality of audio characteristics extracted from the audio chunks of the target animal comprises a rate, a pitch average, a pitch range, an amplitude, one or more harmonics, an intensity, a duration, a silence duration, and a silence rate. From the silence intervals, a silence duration and a rate of silence is extracted. The augmented audio characteristics are generated from these characteristics. The plurality of augmented audio characteristics are derived from statistic measures of the plurality of extracted audio characteristics includes rate, pitch average, pitch range, silence interval, silence rate amplitude, harmonics, tonality, intensity, duration, low level features, energy, zero-crossing rate, spectral centroid, spectral bandwidth, formants, chroma features, temporal features, and loudness.

At step 506 of the method 500, the one or more hardware processors are configured to process the plurality of extracted audio characteristics by a custom CNN to classify a state of the target animal. The state of the target animal are classified as (a) a hunger state, and (b) a non-hunger state. The custom CNN calculates a probability score of hunger by aggregating a probability percentage assigned to each audio chunk comprising the plurality of extracted audio characteristics of the target animal. A number of audio chunks from a total number of audio chunks utilized in calculating the probability score of hunger and is based on one or more variables selected from a breed of the target animal, an age of the target animal, a season, a pregnancy stage, an estrus cycle number, and one or more feeding factors.

The feed recommendation model 110 utilizing the custom CNN provides hunger and non-hunger state with a respective probability percentage. The process of segregating each chuck into the hunger state or the non-hunger state continues for a decent amount of. If the multiple chunks have high probability of hunger, then output is provided as hunger state. If few or one chunk have high probability of hunger, then output is provided as non-hunger state.

At step 508 of the method 500, the one or more hardware processors are configured to assign one or more weights to the plurality of extracted audio characteristics of the target animal to generate a state score. The state score is utilized in sub-classifying the hunger state into a plurality of hunger state levels. Once hunger state is confirmed, a level of hunger is identified using the extracted audio characteristics generated by the state score. The state score determines the hunger state level of hunger. This is done by assigning weights to the one or more extracted audio characteristics. The weights are assigned based on impact of the one or more extracted audio characteristics on the identification of the hunger state level. The high weights are given to those characteristics that change in high degree for variation in hunger state level. The medium weights are given to those characteristics that change in medium degree for variation in hunger state level. The low weights are given to those characteristics that change in low degree for variation in hunger state level. For the state score generation the high weighted audio characteristics are audio duration, rate and pitch range, silence duration and rate, and presence of caretaker. Medium weighted audio characteristics are audio intensity and fundamental frequency. Low or zero weighted audio characteristics are audio amplitude and harmonics. Further, the weighted values of the one or more extracted audio characteristics are normalized between 0 to 1. This is done in reference to a highest and a lowest value of each characteristic. These highest and lowest values are provided to the custom CNN model based on breed and age of the target animal, previously provided to the feed recommendation model 110. The state score is a aggregated value of the normalized score of the one or more extracted audio characteristics having high weightage, the normalized score of the one or more extracted audio characteristics having medium weightage and the normalized score of the one or more extracted audio characteristics having low weightage. If the state score (SS) score is below 1%, then the custom CNN model output the hunger state level as Hunger level-1, if the score is between 1% and 2%, then model output the hunger state level as Hunger level-2, if the score is between 2% and 3%, then model output the hunger state level as Hunger level-3, if score is between 3% and 4%, then model output the hunger state level as Hunger level-4, and if score is above 4%, then model output the hunger state level as Hunger level-5. According to an embodiment, the state score is divided into n numbers of hunger state levels based on a desired accuracy level of the hunger state level identification.

At step 510 of the method 500, the one or more hardware processors are configured to store one or more extracted audio characteristics associated with a detected hunger state level from the plurality of hunger state levels. The values of the extracted audio characteristics associated with the detected hunger state level from the plurality of hunger state levels are mapped to the state machine. If these values of the extracted audio characteristics are smaller or higher than a pre-defined boundary limits of a plurality of extracted audio characteristics available in the state machine for the detected hunger state level, then these boundary limits will get updated or replaced for detected hunger state level in the state machine for the stored audio characteristics values. This will make the state machine dynamic and adapt to new scenarios. The new scenarios include one or more new breeds, age, weather conditions, time of the day, milk yield, and estrus cycle number.

At step 512 of the method 500, the one or more hardware processors 104 are configured to identify a plurality of current possible emotions and a plurality of current possible behaviors of the target animal by providing the detected hunger state level of the target animal to the state machine (SM). The current possible emotions and the current possible behaviors of the target animal in the detected hunger state level are identified using the current state from the state machine.

At step 514 of the method 500, the one or more hardware processors are configured to detect at least one current emotion by providing the plurality of current possible emotions, and the extracted audio characteristics to the custom CNN. At least one current possible emotion is identified from the plurality of possible emotions. The custom CNN is trained with multiple distinct output layers, each corresponding to a specific set of emotions associated with a specific hunger state level.

At step 516 of the method 500, the one or more hardware processors are configured to identify at least one behavior associated with the at least one current emotion detected by the custom CNN. Based on the at least one current emotion detected, the current behavior is identified. Each emotion is tagged with the most prominent behavior, which is used to identify at least one current behavior.

At step 518 of the method 500, the one or more hardware processors are configured to assign one or more weights to the plurality of extracted audio characteristics of the at least one current emotion of the target animal to generate an emotion score, wherein the emotion score is utilized in identifying a current emotion progression level of the target animal. The custom CNN utilizes the at least one current emotion of the target animal out of the plurality of current emotions associated to the current hunger state level is detected. The current emotion progression level is estimated using emotion score. An emotion score is estimated to detect the current emotion progression level. The emotion score is an aggregated value of the normalized value the one or more extracted audio characteristics having the high weightage, the normalized value the one or more extracted audio characteristics having the medium weightage, and the normalized value the one or more extracted audio characteristics having the low weightage. The emotion score is calculated as per equation (2). Here, an audio frequency, an audio duration, an audio rate, a silence interval rate, a duration, an audio intensity are the high weighted extracted audio characteristics. An audio pitch and an audio formants are the medium weighted extracted audio characteristics. An audio harmonics is the low weighted extracted audio characteristic.

At step 520 of the method 500, the one or more hardware processors are configured to generate an activity score by aggregating a weighted state score and a weighted emotion score wherein one or more weights are applied to the state score and the emotion score to identify an overall state of the target animal represented by the activity score. The weighted state score is utilized in precise identification of the hunger state level of the target animal. And the weighted emotion score is utilized in precise identification of the current emotion progression level of the animal. The activity score is computed by aggregating a weighted sum of the state score and the emotion score.

At step 522 of the method 500, the one or more hardware processors are configured to generate one or more feed recommendations for the target animal by providing (a) the detected hunger state level, (b) the at least one current emotion, (c) the at least current behavior, (d) the emotion score, and (e) the cattle activity score to a pre-trained LLM. The LLM is a type of machine learning model designed to process and generate natural language text. LLMs are typically based on neural networks, a type of artificial intelligence that is inspired by the structure and function of the human brain. LLMs are used in a wide variety of natural language processing (NLP) tasks, such as language translation, text summarization, and chatbots. Some examples of popular LLMs include OpenAI's ChatGPT™, GPT-4™, GPT-3.5™, GPT-3™, GPT-1™, GPT-2™, BERT™, DALL-E™, LLaMA™, Mistral™ model 7B, GPT-Neo, Midjour-ney and the like. These models have achieved remarkable performance on a wide range of NLP tasks and are considered to be some of the most advanced AI systems in existence.

The detected hunger state level by the custom CNN, the at least one current emotion identified by the custom CNN, the at least one current behavior identified by the custom CNN and the state machine, the emotion score as a weighted aggregate of the plurality of extracted audio characteristics, and the activity score as an aggregate of the emotion score and the state score are provided to the LLM model to generate the one or more feed recommendations for the target animal.

According to an embodiment, wherein a plurality of next possible hunger state levels from the state machine are provided to a regression model. The regression model simulates a plurality of next possible emotions and a plurality of next possible behaviors of the target animal for detecting at least one from the plurality of next possible hunger state levels when the recommended feed is not provided.

According to an embodiment, the one or more feed recommendations generated by the LLM is utilized in providing a recommended feed to the target animal by one or more feed dispensers. The one or more feed dispensers are placed in closed proximity to the target animal and is capable of detecting a presence of the target animal before dispensing the feed. The one or more feed dispensers are connected to a control device that receives signals from the system 100. The control unit may represent a personal digital assistant for e.g., a smart phone or a tablet. The control unit serves as a user interface for ultimately sending signals to the feed dispensers according to programming instructions that have been input by the caretaker or a person assigned for performing the feed dispensing. The control unit is in communication with the feed dispensers. Preferably, communication takes place through a web-based platform, or application, which sends signals to the feeding dispensers. Such signals may be through a telecommunications network.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements with insubstantial differences from the literal language of the embodiments described herein.

Therefore, the method of automated feed recommendation is based on analysing vocalization patterns of the target animal from the utterance. The custom CNN based approach firstly identifies whether the target animal is in a state of hunger or not. Once the target animal is identified to be in the hunger state, the method systematically determines one or more hunger state levels using state score. The hunger state level identification is utilized in identifying a plurality of emotions associated to the identified hunger state level. The method further identifies one or more behavior exhibited by the target animal in the hunger state level. From plurality of emotions at least one current emotion is identified. Emotion score is calculated for the current emotion. From one or more behavior at least one current behavior is identified using identified emotion. The cattle activity score is calculated using state and emotion score. The identified hunger state, the hunger state level, the associated current emotion, emotion score, cattle activity score and the associated current behavior are provided to the LLM to generate at least one feed recommendation to the target animal.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (500) of an automated feed recommendation, the method comprising steps:

> extracting (502), via one or more hardware processors, one or more audio chunks of a target animal from an audio file, wherein the audio file comprises (i) one or more audio chunks associated with one or more animals, (ii) one or more audio chunks associated with one or more caretakers, and (iii) one or more audio chunks corresponding to background noises;
> extracting (504), via the one or more hardware processors, a plurality of augmented audio characteristics from the one or more audio chunks of the target animal to obtain a plurality of extracted audio characteristics;
> processing (506), via the one or more hardware processors, the plurality of extracted audio characteristics by a custom convolutional neural network (CNN) to classify a state of the target animal as one of (a) a hunger state, and (b) a non-hunger state, wherein the custom CNN calculates a probability score of hunger by aggregating a probability percentage assigned to each audio chunk comprising the plurality of extracted audio characteristics of the target animal;
> assigning (508), via the one or more hardware processors, one or more weights to the plurality of extracted audio characteristics of the target animal to generate a state score, wherein the state score is utilized in sub-classifying the hunger state into a plurality of hunger state levels;
> storing (510), via the one or more hardware processors, one or more extracted audio characteristics associated with a detected hunger state level from the plurality of hunger state levels;
> identifying (512), via the one or more hardware processors, a plurality of current possible emotions and a plurality of current possible behaviors of the target animal by providing the detected hunger state level of the target animal to a state machine (SM);
> detecting (514), via the one or more hardware processors, at least one current emotion by providing the plurality of current possible emotions, and the extracted audio characteristics to the custom CNN;
> identifying (516), via the one or more hardware processors, at least one behavior associated with the at least one current emotion detected by the custom CNN;
> assigning (518), one or more weights, via one or more hardware processors, to the plurality of extracted audio characteristics of the at least one current emotion of the target animal to generate an emotion score, wherein the emotion score is utilized in identifying a current emotion progression level of the target animal;
> generating (520), via one or more hardware processors, an activity score by aggregating a weighted state score and a weighted emotion score wherein one or more weights are applied to the state score and the emotion score to identify an overall state of the target animal represented by the activity score; and
> generating (522), via one or more hardware processors, one or more feed recommendations for the target animal by providing (a) the detected hunger state level, (b) the at least one current emotion, (c) the at least current behavior, (d) the emotion score, and (e) the activity score to a pre-trained large language model (LLM).

2. The method as claimed in claim 1, wherein the one or more feed recommendations generated by the LLM is utilized in providing a recommended feed to the target animal by one or more feed dispensers, wherein the plurality of audio characteristics extracted from the one or more audio chunks of the target animal comprises a rate, a pitch average, a pitch range, an amplitude, one or more harmonics, an intensity, a duration, a silence duration, and a silence rate, and wherein the one or more weights assigned to the extracted audio characteristics carries (a) high weights to an audio duration, an audio rate, a pitch range, silence duration, a silence rate, and a presence of the caretaker, (b) medium weights to an audio intensity and a fundamental frequency, and (c) low or zero weights to an audio amplitude and audio harmonics.

3. The method as claimed in claim 1, wherein the state score determines the hunger state level, and is represented as:

$$\text{State Score (SS)} = f(AC_{10} * HW_S, AC_{11} * HW_S, AC_2 * MW_S, AC_3 * LW_S),$$

> where, $AC_{10}$ is the average of the normalized value of audio duration, audio rate, audio pitch range, silence rate, $AC_{11}$ is the average of the normalized value of silence duration and rate of caretaker's interaction with the target

animal,

$AC_2$ is the average of the normalized value of audio intensity and audio fundamental frequency,

$AC_3$ is the average of the normalized value of audio amplitude and audio harmonics, and

$HW_S$, $MW_S$ and $LW_S$ are the high weightage, medium weightage and low weightage for state score generation, respectively.

4. The method as claimed in claim 1, wherein the emotion score is represented as:

$$\text{Emotion Score (ES)} = f(AC_1 * HW_E, AC_2 * MW_E, AC_3 * LW_E),$$

where,

AC1 is an average of normalized values of an audio frequency, an audio duration, an audio rate, a silence interval rate, a silence duration, and an audio intensity,

AC2 is the average of the normalized value of an audio pitch, an audio formants, and

AC3 is the average of the normalized value of an audio harmonics, and

$HW_E$, $MW_E$ and $LW_E$ are the high weightage, medium weightage and low weightage for emotion score generation, respectively.

5. The method as claimed in claim 1, wherein one or more values assigned to the plurality of extracted audio characteristics for detected hunger state level are pre-defined in the state machine as a boundary limit of each detected hunger state level, and wherein the boundary limit get updated for each detected hunger state level in the state machine based on one or more custom CNN recommendations, wherein the state machine comprises: (a) a plurality of possible states exhibited by one or more animals, wherein the plurality of possible states are mapped on a time scale from $t_0$ to $t_n$, and wherein the plurality of possible states comprises (a) a zero hunger state, (b) a hunger state having a plurality of intensity levels, and (c) a plurality of partial fed states having a plurality of intensity levels, and wherein the plurality of intensity levels associated with the hunger state and the partial fed state exhibits an upward trend with a lowest intensity level at a time $t_0$ and a highest intensity level at the time $t_n$.

6. The method as claimed in claim 1, wherein the state machine is prepared by the steps comprising:

classifying the one or more audio chunks into the plurality of possible states exhibited by the target animal by the custom CNN model wherein the custom CNN is pre-trained on a plurality of audio chunks of the one or more animals;

characterizing one or more intensity levels associated with each state from the plurality of possible states, wherein the one or more intensity levels are correlated with a plurality of audio characteristics exhibited in the one or more audio chunks;

tagging one or more emotions to each intensity levels from an emotional matrix wherein the emotion matrix comprises a plurality of emotions; and

tagging one or more behaviors to each intensity levels from a behavior matrix wherein the behavior matrix comprises a plurality of behaviors.

7. The method as claimed in claim 1, wherein a plurality of next possible hunger state levels from the state machine are provided to a regression model wherein the regression model simulates a plurality of next possible emotions and a plurality of next possible behaviors of the target animal for determining the hunger state level of the target animal at a future time instance, and wherein the number of audio chunks extracted is based on a plurality of parameters comprising a breed of the target animal, an age of the target animal, a season, a pregnancy stage, an estrus cycle number, and one or more feeding factors.

8. A system (100), comprising:

a memory (102) storing instructions;

one or more communication interfaces (106); and

one or more hardware processors (104) coupled to the memory (102) via the one or more communication interfaces (106), wherein the one or more hardware processors (104) are configured by the instructions to:

extract one or more audio chunks of a target animal from an audio file, wherein the audio file comprises (i) one or more audio chunks associated with one or more animals, (ii) one or more audio chunks associated with one or more caretakers, and (iii) one or more audio chunks corresponding to background noises;

extract a plurality of augmented audio characteristics from the one or more audio chunks of the target animal to obtain a plurality of extracted audio characteristics;

process the plurality of extracted audio characteristics by a custom convolutional neural network (CNN) to classify a state of the target animal as one of (a) a hunger state, and (b) a non-hunger state, wherein the custom CNN calculates a probability score of hunger by aggregating a probability percentage assigned to each audio chunk comprising the plurality of extracted audio characteristics of the target animal;

assign one or more weights to the plurality of extracted audio characteristics of the target animal to generate a state score, wherein the state score is utilized in sub-classifying the hunger state into a plurality of hunger state levels;

store one or more extracted audio characteristics associated with a detected hunger state level from the plurality of hunger state levels;

identify a plurality of current possible emotions and a plurality of current possible behaviors of the target animal by providing the detected hunger state level of the target animal to a state machine (SM);

detect at least one current emotion by providing the plurality of current possible emotions, and the extracted audio characteristics to the custom CNN;

identify at least one behavior associated with the at least one current emotion detected by the custom CNN;

assign via one or more hardware processors, to the plurality of extracted audio characteristics of the at least one current emotion of the target animal to generate an emotion score, wherein the emotion score is utilized in identifying a current emotion progression level of the target animal;

generate an activity score by aggregating a weighted state score and a weighted emotion score wherein one or more weights are applied to the state score and the emotion score to identify an overall state of the target animal represented by the activity score; and

generate one or more feed recommendations for the target animal by providing (a) the detected hunger state level, (b) the at least one current emotion, (c) the at least current behavior, (d) the emotion score, and (e) the activity score to a pre-trained large language model (LLM).

9. The system as claimed in claim 8, wherein the one or more feed recommendations generated by the LLM is utilized in providing a recommended feed to the target animal by one or more feed dispensers. wherein the plurality of audio characteristics extracted from the one or more audio chunks of the target animal comprises a rate, a pitch average, a pitch range, an amplitude, one or more harmonics, an intensity, a duration, a silence duration, and a silence rate.and wherein the one or more weights assigned to the extracted audio characteristics carries (a) high weights to an audio duration, an audio rate, a pitch range, silence duration, a silence rate, and a presence of the caretaker, (b) medium weights to an audio intensity and a fundamental frequency, and (c) low or zero weights to an audio amplitude and audio harmonics.

10. The system as claimed in claim 8, wherein the state score determines the hunger state level, and is represented as:

$$\text{State Score (SS)} = f(AC_{10} * HW_S, AC_{11} * HW_S, AC_2 * MW_S, AC_3 * LW_S),$$

where, $AC_{10}$ is the average of the normalized value of audio duration, audio rate, audio pitch range, silence rate,
$AC_{11}$ is the average of the normalized value of silence duration and rate of caretaker's interaction with the target animal,
$AC_2$ is the average of the normalized value of audio intensity and audio fundamental frequency,
$AC_3$ is the average of the normalized value of audio amplitude and audio harmonics, and
$HW_S$, $MW_S$ and $LW_S$ are the high weightage, medium weightage and low weightage for state score generation, respectively.

11. The system as claimed in claim 8, wherein the emotion score is represented as:

$$\text{Emotion Score (ES)} = f(AC_1 * HW_E, AC_2 * MW_E, AC_3 * LW_E),$$

where,

AC1 is an average of normalized values of an audio frequency, an audio duration, an audio rate, a silence interval rate, a silence duration, and an audio intensity,

AC2 is the average of the normalized value of an audio pitch, an audio formants, and

AC3 is the average of the normalized value of an audio harmonics, and $HW_E$, $MW_E$ and $LW_E$ are the high weightage, medium weightage and low weightage for emotion score generation, respectively.

12. The system as claimed in claim 8, wherein one or more values assigned to the plurality of extracted audio characteristics for detected hunger state level are pre-defined in the state machine as a boundary limit of each detected hunger state level, and wherein the boundary limit get updated for each detected hunger state level in the state machine based on one or more custom CNN recommendations, wherein the state machine comprises: (a) a plurality of possible states exhibited by one or more animals, wherein the plurality of possible states are mapped on a time scale from $t_0$ to $t_n$, wherein the plurality of possible states comprises (a) a zero hunger state, (b) a hunger state having a plurality of intensity levels, and (c) a plurality of partial fed states having a plurality of intensity levels, and wherein the plurality of intensity levels associated with the hunger state and the partial fed state exhibits an upward trend with a lowest intensity level at a time $t_0$ and a highest intensity level at the time $t_n$.

13. The system as claimed in claim 8, wherein the state machine is prepared by the steps comprising:

classifying the one or more audio chunks into the plurality of possible states exhibited by the target animal by the custom CNN model wherein the custom CNN is pre-trained on a plurality of audio chunks of the one or more animals;

characterizing one or more intensity levels associated with each state from the plurality of possible states, wherein the one or more intensity levels are correlated with a plurality of audio characteristics exhibited in the one or more audio chunks;

tagging one or more emotions to each intensity levels from an emotional matrix wherein the emotion matrix comprises a plurality of emotions; and

tagging one or more behaviors to each intensity levels from a behavior matrix wherein the behavior matrix comprises a plurality of behaviors.

14. The system as claimed in claim 8, wherein a plurality of next possible hunger state levels from the state machine are provided to a regression model wherein the regression model simulates a plurality of next possible emotions and a plurality of next possible behaviors of the target animal for determining the hunger state level of the target animal at a future time instance, and wherein the number of audio chunks extracted is based on a plurality of parameters comprising a breed of the target animal, an age of the target animal, a season, a pregnancy stage, an estrus cycle number, and one or more feeding factors.

15. One or more non-transitory machine-readable information storage mediums comprising one or more instructions which when executed by one or more hardware processors cause:

extracting one or more audio chunks of a target animal from an audio file, wherein the audio file comprises (i) one or more audio chunks associated with one or more animals, (ii) one or more audio chunks associated with one or more caretakers, and (iii) one or more audio chunks corresponding to background noises;

extracting a plurality of augmented audio characteristics from the one or more audio chunks of the target animal to obtain a plurality of extracted audio characteristics;

processing the plurality of extracted audio characteristics by a custom convolutional neural network (CNN) to classify a state of the target animal as one of (a) a hunger state, and (b) a non-hunger state, wherein the custom CNN calculates a probability score of hunger by aggregating a probability percentage assigned to each audio chunk further comprising plurality of extracted audio characteristics of the target animal;

assigning one or more weights to the plurality of extracted audio characteristics of the target animal to generate a state score, wherein the state score is utilized in sub-classifying the hunger state into a plurality of hunger state levels;

storing one or more extracted audio characteristics associated with a detected hunger state level from the plurality of hunger state levels;

identifying a plurality of current possible emotions and a plurality of current possible behaviors of the target animal by providing the detected hunger state level of the target animal to a state machine (SM);

detecting at least one current emotion by providing the plurality of current possible emotions, and the extracted audio characteristics to the custom CNN;

identifying at least one behavior associated with the at least one current emotion detected by the custom CNN;

assigning one or more weights to the plurality of extracted audio characteristics of the at least one current emotion of the target animal to generate an emotion score, wherein the emotion score is utilized in identifying a current emotion progression level of the target animal;

generating an activity score by aggregating a weighted state score and a weighted emotion score, wherein one or more weights are applied to the state score and the emotion score to identify an overall state of the target animal represented by the activity score; and

generating one or more feed recommendations for the target animal by providing (a) the detected hunger state level, (b) the at least one current emotion, (c) the at least current behavior, (d) the emotion score, and (e) the activity score to a pre-trained large language model (LLM).

System **100**

Processors(s) **104**

I/O Interface(s) **106**

Memory **102**

Database **108**

Feed recommendation model 110

State Machine110A

Vocalization identifier module 110B

FIG. 1

FIG. 2

FIG. 3

FIG. 4A

A

410

activity score

412

hunger state level, emotion, emotion score,
behavior, and activity score

Next multiple cattle state,
emotion, behavior progression
predictor

Actuating feed barn
for selected animal

FIG. 4B

500

extracting one or more audio chunks of a target animal from an audio file, wherein the audio file comprises (i) one or more audio chunks associated with one or more animals, (ii) one or more audio chunks associated with one or more caretakers, and (iii) one or more audio chunks corresponding to background noises — 502

extracting a plurality of augmented audio characteristics from the one or more audio chunks of the target animal to obtain a plurality of extracted audio characteristics — 504

processing the plurality of extracted audio characteristics by a custom convolutional neural network (CNN) to classify a state of the target animal as one of (a) a hunger state, and (b) a non-hunger state, wherein the custom CNN calculates a probability score of hunger by aggregating a probability percentage assigned to each audio chunk comprising the plurality of extracted audio characteristics of the target animal — 506

A

**FIG. 5A**

500

(A)

assigning one or more weights to the plurality of extracted audio characteristics of the target animal to generate a state score, wherein the state score is utilized in sub-classifying the hunger state into a plurality of hunger state levels _/⟶ 508

storing one or more extracted audio characteristics associated with a detected hunger state level from the plurality of hunger state levels _/⟶510

identifying a plurality of current possible emotions and a plurality of current possible behaviors of the target animal by providing the detected hunger state level of the target animal to a state machine (SM) _/⟶ 512

detecting, via the one or more hardware processors, at least one current emotion by providing the plurality of current possible emotions, and the extracted audio characteristics to the custom CNN _/⟶514

(B)

FIG. 5B

500

(C)

516

identifying at least one behavior associated with the at least one current emotion detected by the CNN

518

assigning one or more weights to the plurality of extracted audio characteristics of the at least one current emotion of the target animal to generate an emotion score, wherein the emotion score is utilized in identifying a current emotion progression of the target animal

520

generating an activity score by aggregating a weighted state score and a weighted emotion score wherein one or more weights are applied to the state score and the emotion score to identify an overall state of the target animal represented by the activity score

522

generating one or more feed recommendations for the target animal by providing (a) the detected hunger state level, (b) the at least one current emotion, (c) the at least current behavior, (d) the emotion score, and (e) the activity score to a pre-trained large language model (LLM)

FIG. 5C

Europäisches
Patentamt

European
Patent Office

Office européen
des brevets

# EUROPEAN SEARCH REPORT

**Application Number**

EP 25 20 3063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE INSPEC [Online] THE INSTITUTION OF ELECTRICAL ENGINEERS, STEVENAGE, GB; 26 February 2024 (2024-02-26), PATIL R ET AL: "Interpreting Cattle Behaviour and Specific Behaviour Intensities with Acoustic Biomarkers", XP093345011, Database accession no. 27522345 * abstract * | 1-15 | INV. G10L17/26 A01K29/00 G10L25/30 G10L25/51 G10L25/63 |
| A,P | & PATIL RUTURAJ ET AL: "Interpreting Cattle Behaviour and Specific Behaviour Intensities with Acoustic Biomarkers", 20 October 2025 (2025-10-20), PATTERN RECOGNITION APPLICATIONS AND METHODS; [LECTURE NOTES IN COMPUTER SCIENCE; LECT.NOTES COMPUTER], SPRINGER NATURE SWITZERLAND, CHAM, PAGE(S) 147 - 162, XP047743564, ISSN: 0302-9743 ISBN: 978-3-032-06006-8 [retrieved on 2025-10-20] * page 147, line 1 - page 152, last line; figures 1,2; tables 1,2 * | 1-15 | |
| A | CN 118 435 883 A (UNIV INNER MONGOLIA TECHNOLOGY) 6 August 2024 (2024-08-06) * paragraph [0004] - paragraph [0069]; claim 1 * -/-- | 1-15 | TECHNICAL FIELDS SEARCHED (IPC) G10L A01K G06N |

The present search report has been drawn up for all claims

| Place of search | Date of completion of the search | Examiner |
|---|---|---|
| Munich | 15 December 2025 | Dobler, Ervin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

## EUROPEAN SEARCH REPORT

Application Number

EP 25 20 3063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAVISANKAR B ET AL: "Prediction of Kitty Moods using their Phonics in Convolutional Neural Networks(CNNs)", 2024 15TH INTERNATIONAL CONFERENCE ON COMPUTING COMMUNICATION AND NETWORKING TECHNOLOGIES (ICCCNT), IEEE, 24 June 2024 (2024-06-24), pages 1-8, XP034742995, DOI: 10.1109/ICCCNT61001.2024.10726165 [retrieved on 2024-11-04] * page 1, left-hand column, line 1 - page 8, left-hand column, line 10 * ----- | 1-15 | |

TECHNICAL FIELDS SEARCHED (IPC)

The present search report has been drawn up for all claims

| Place of search | Date of completion of the search | Examiner |
|---|---|---|
| Munich | 15 December 2025 | Dobler, Ervin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 3063

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2025

| Patent document cited in search report | Publication date | Patent family member(s) | Publication date |
|---|---|---|---|
| CN 118435883 A | 06-08-2024 | NONE | |

For more details about this annex : see Official Journal of the European Patent Office, No. 12/82

**EP 4 752 877 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421093801